# EUROPEAN PATENT APPLICATION

(11) **EP 4 675 283 A1**
(43) Date of publication of application: **07.01.2026**
(21) Application number: 25181725.0
(22) Date of filing: 10.06.2025
(51) Int. Cl.: G01P 15/13, G01P 15/125

(54) **ACCELEROMETER WITH MAGNET FIXATION FEATURE**

(30) Priority: 02.07.2024 US 202418762468
(71) Applicant: Honeywell International Inc., Charlotte, NC 28202 (US)
(72) Inventor: DWYER, Paul W., Charlotte, 28202 (US); BECKA, Stephen F., Charlotte, 28202 (US); WEINMANN, Robert G., Charlotte, 28202 (US)
(74) Representative: Haseltine Lake Kempner LLP

(57) **Abstract**

An accelerometer system comprising: a housing; a magnet disposed within the housing and extending along a longitudinal axis from a first end to a second end; and a metallic insert disposed between the first end of the magnet and a surface of the housing, wherein a first surface of the metallic insert is configured to contact the first end of the magnet, and wherein a second surface of the metallic insert is configured to contact the surface of the housing.

## Description

### TECHNICAL FIELD

This disclosure relates to accelerometers.

### BACKGROUND

Accelerometers function by detecting a displacement of a proof mass under inertial forces. Some accelerometers include a capacitive pick-off system. For example, electrically conductive material (e.g., a capacitor plate) may be deposited on the upper surface of the proof mass, and similar electrically conductive material may be deposited on the lower surface of the proof mass. An acceleration or force applied along the sensitive axis of the accelerometer causes the proof mass to deflect either upwardly or downwardly causing the distance (e.g., a capacitive gap) between the pick-off capacitance plates and upper and lower non-moving members to vary. This variance in the capacitive gap causes a change in the capacitance of the capacitive elements, which is representative of the displacement of the proof mass along the sensitive axis. The change in the capacitance may be used as a displacement signal, which may be applied to a servo system that includes one or more electromagnets (e.g., a force-rebalancing coil) to return the proof mass to a null or at-rest position.

### SUMMARY

In general, the disclosure is directed to devices, systems, and techniques for affixing a magnet to a non-moving member within an accelerometer system. During operation of the accelerometer system, adhesives used to secure the magnet to the non-moving member may change shape (e.g., due to a change in temperature), which may impede the travel of magnetic flux through the adhesive and/or affect a scale factor of the magnet, thereby altering the accuracy of the accelerometer system as the temperature within the accelerometer system changes.

As described in this disclosure, the accelerometer system may include a shim (alternatively referred to herein as a "metallic insert") disposed between the magnet and the non-moving member (e.g., an excitation ring of the accelerometer system). The shim may be formed from a metallic alloy. The shim may exhibit increased permeability of magnetic flux (e.g., compared to an adhesive) between the non-moving member and the magnet and/or may maintain a substantially similar shape regardless of the internal temperature of the accelerometer system. The increased permeability of the shim may reduce and/or eliminate the effects of a change in temperature within the accelerometer system on the scale factor, and thereby the accuracy, of the accelerometer system. The shim may be shaped to reduced localized saturation of magnetic flux along the surface of the magnet and/or may reduce circumferential and/or radial strain on the magnet.

In some examples, this disclosure describes an accelerometer system comprising: a housing; a magnet disposed within the housing and extending along a longitudinal axis from a first end to a second end; and a metallic insert disposed between the first end of the magnet and a surface of the housing, wherein a first surface of the metallic insert is configured to contact the first end of the magnet, and wherein a second surface of the metallic insert is configured to contact the surface of the housing.

In some examples, this disclosure describes an accelerometer system comprising: an excitation ring; a magnetic assembly comprising: a pole piece, a magnet configured to generate a magnetic flux, and a metallic insert disposed between the excitation ring and the magnet; a proof mass assembly comprising: a proof mass, a coil disposed around the pole piece, wherein the magnetic flux flows from the excitation ring to the pole piece across the coil; and processing circuitry configured to: cause a current to flow through the coil to apply a Lorentz force to the proof mass.

In some examples, this disclosure describes a metallic insert comprising: an annular body extending around a longitudinal axis, the annular body defining: a first surface; a second surface different from the first surface; and an opening extending from the first surface to the second surface; and a plurality of slots disposed on the annular body, wherein each slot of the plurality of slots extends at least partially around the longitudinal axis, wherein the metallic insert is configured to be disposed between a magnet of an accelerometer and an excitation ring of the accelerometer.

The summary is intended to provide an overview of the subject matter described in this disclosure. It is not intended to provide an exclusive or exhaustive explanation of the systems, device, and methods described in detail within the accompanying drawings and description below. Further details of one or more examples of this disclosure are set forth in the accompanying drawings and in the description below. Other features, objects, and advantages will be apparent from the description and drawings, and from the claims.

### BRIEF DESCRIPTION OF DRAWINGS

FIG. 1 is a block diagram illustrating an accelerometer system, in accordance with one or more techniques of this disclosure.
FIG. 2 is a conceptual diagram illustrating a side cutaway view of an example of the accelerometer system of FIG. 1.
FIG. 3 is a cross-sectional diagram illustrating an example cross-sectional view of the accelerometer system of FIG. 2, the cross-section being taken along line A-A of FIG. 2.
FIG. 4A is a conceptual diagram illustrating a side view of an example pole piece assembly of the accelerometer system of FIG. 2.
FIG. 4B is a conceptual diagram illustrating a side view of another example pole piece assembly of the accelerometer system of FIG. 2.
FIG. 4C is a conceptual diagram illustrating a side view of another example pole piece assembly of the accelerometer system of FIG. 2.
FIG. 5 is a conceptual diagram illustrating a top view of an example metallic insert of the accelerometer system of FIG. 2.
FIG. 6 is a conceptual diagram illustrating a top view of another example metallic insert of the accelerometer system of FIG. 2.
FIG. 7 is a flow chart illustrating an example technique for determining an acceleration using the electromagnetic accelerometer of FIG. 1.

Like reference characters denote like elements throughout the description and figures.

### DETAILED DESCRIPTION

This disclosure is directed to devices, systems, and techniques for determining an acceleration of an object using an accelerometer system. For example, the accelerometer system may be an electromagnetic accelerometer system configured to precisely measure acceleration values. The electromagnetic accelerometer system uses a combination of electrical signals and magnetic signals to determine the acceleration of the object. For example, the accelerometer system may include a magnetic pole piece, an electrical coil, a non-moving member, and a proof mass. A magnetic flux may travel from the pole piece, through the coil to the non-moving member, and back to the proof mass. An electrical current may flow through the coil. The accelerometer system may generate a Lorentz force based on the magnetic flux and the electrical current, the Lorentz force representing a servo effect which prevents a displacement of the proof mass.

In some cases, the accelerometer system is configured to measure the acceleration of the object in real-time or near real-time, such that processing circuitry may analyze the acceleration of the object over a period of time to determine a positional displacement of the object during the period of time. For example, the accelerometer system may be a part of an inertial navigation system (INS) for tracking a position of an object based, at least in part, on an acceleration of the object. Additionally, the accelerometer system may be located on or within the object such that the accelerometer system accelerates with the object. As such, when the object accelerates, the acceleration system (including the proof mass) accelerates with the object. Since acceleration over time is a derivative of velocity over time, and velocity over time is a derivative of position over time, processing circuitry may, in some cases, be configured to determine the position displacement of the object by performing a double integral of the acceleration of the object over the period of time. Determining a position of an object using the accelerometer system located on the object - and not using a navigation system external to the object (e.g., a global navigation satellite system (GNSS)) - may be referred to as "dead reckoning."

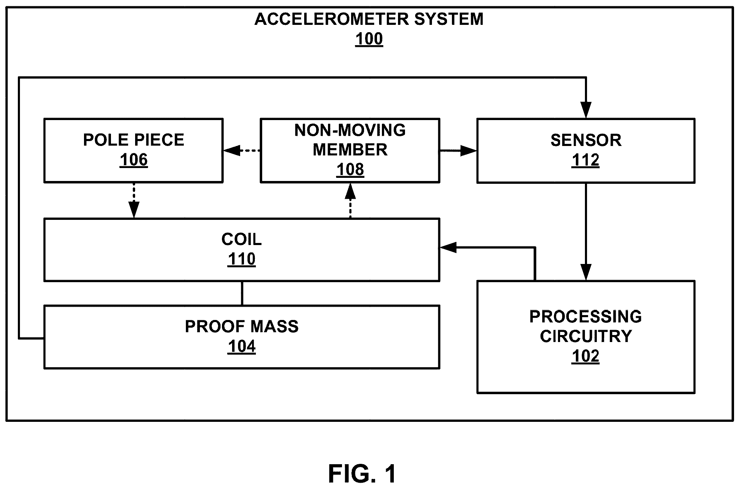

FIG. 1 is a block diagram illustrating an accelerometer system 100 (alternatively referred to herein as "system 100"), in accordance with one or more techniques of this disclosure. While system 100 is primarily illustrated herein as a single-magnet accelerometer system, the techniques, elements, and components described herein may be applied in dual-magnet accelerometer systems. As illustrated in FIG. 1, accelerometer system 100 includes processing circuitry 102, proof mass 104, pole piece 106, non-moving member 108 (alternatively referred to herein as "excitation ring 108"), coil 110, and sensor 112.

System 100 is configured to determine an acceleration associated with an object (not illustrated in FIG. 1) based on a magnitude of one or more electrical signals delivered to coil 110, the electrical signals preventing proof mass 104 from displacing from a null position. For example, sensor 112 may be configured to generate a sense signal which indicates a size of a gap between proof mass 104 and non-moving member 108. Processing circuitry 102 may generate an electrical signal for delivery to coil 110 based on the sensed signal. The electrical signal may induce one or more Lorentz forces which prevent the displacement of proof mass 104 from a null position. For example, the electrical signal may induce a Lorentz force which, along with other forces (e.g., acceleration forces) interact with proof mass 104 to inhibit displacement of proof mass 104 from the null position.

A Lorentz force represents a force caused by an interaction of an electric field and a magnetic field. For example, a Lorentz force may be defined by a cross-product of an electrical field and a magnetic field, where the direction of the Lorentz force depends on the direction of the electrical field and the direction of the magnetic field, and where the magnitude of the Lorentz force depends on the magnitude of the electrical field and the magnitude of the magnetic field.

Processing circuitry 102 may include one or more processors that are configured to implement functionality and/or process instructions for execution within system 100. For example, processing circuitry 102 may be capable of processing instructions stored in a memory. Processing circuitry 102 may include, for example, microprocessors, digital signal processors (DSPs), application specific integrated circuits (ASICs), field-programmable gate arrays (FPGAs), or equivalent discrete or integrated logic circuitry, or a combination of any of the foregoing devices or circuitry. Accordingly, processing circuitry 102 may include any suitable structure, whether in hardware, software, firmware, or any combination thereof, to perform the functions ascribed herein to processing circuitry 102.

A memory (not illustrated in FIG. 1) may be configured to store information within system 100 during operation. The memory may include a computer-readable storage medium or computer-readable storage device. In some examples, the memory includes one or more of a short-term memory or a long-term memory. The memory may include, for example, random access memories (RAM), dynamic random access memories (DRAM), static random access memories (SRAM), magnetic discs, optical discs, flash memories, or forms of electrically programmable memories (EPROM) or electrically erasable and programmable memories (EEPROM). In some examples, the memory is used to store program instructions for execution by processing circuitry 102.

Processing circuitry 102 may generate the electrical signal as a part of one or more negative feedback loops which maintain proof mass 104 in the null position. In some examples, processing circuitry 102 may cause a generator of system 100 to generate electrical signals, e.g., in the form of electrical currents. Processing circuitry 102, coil 110, and sensor 112 may represent components of a negative feedback loop. The negative feedback loop may maintain a width of the gap between proof mass 104 and non-moving member 108 at a null width. Sensor 112 may generate the sense signal which indicates a capacitance value. The capacitance value is correlated with the width of the gap between proof mass 104 and non-moving member 108 and delivers first sense signal to processing circuitry 102. Processing circuitry 102 may generate (e.g., from the generator) the electrical signal based on the sense signal and deliver the electrical signal to coil 110 in order to maintain the capacitance value of the sense signal at a null capacitance value. By generating the electrical signal in order to maintain the capacitance value of the sense signal at the null capacitance value, processing circuitry 102 maintains a width of the gap between the proof mass 104 and first non-moving member 108 at the null width.

When an acceleration of system 100 along a sense axis changes, the resulting acceleration force applied to proof mass 104 may change. Consequently, processing circuitry 102 may change a magnitude of the electrical signal delivered to coil 110 in order to prevent a displacement of proof mass 104 relative to non-moving member 108. In one example, the acceleration along the sense axis may increase from a first acceleration value to a second acceleration value. Processing circuitry 102 may change the magnitude of the electrical signal in order to account for the change in acceleration so that proof mass 104 remains in the null position relative to non-moving member 108. Processing circuitry 102 may determine the acceleration of system 100 along the sense axis based on the magnitude of the electrical signal delivered to coil 110.

In some examples, the magnitude of the electrical signal delivered to coil 110 is proportional to the acceleration along the sense axis. As such, an increase in the magnitude of the electrical signal may correspond to an increase in the acceleration along the sense axis. Alternatively, a decrease in the magnitude of the electrical signal may correspond to a decrease in the acceleration along the sense axis.

System 100 may include a magnetic flux loop. The magnetic flux loop may include pole piece 106, non-moving member 108, and coil 110. Within the magnetic flux loop, magnetic flux may travel from pole piece 106 through coil 110 to non-moving member 108. The magnetic flux then travels through non-moving member 108 back to pole piece 106. In some examples, pole piece 106 includes a magnet which generates the magnetic flux. Pole piece 106 may be connected to a magnet. The magnet and non-moving member 108 may be connected via a metallic insert (alternatively referred to herein as a "shim") disposed between the magnet and non-moving member 108. The metallic insert may define a metal-to-metal contact between the metallic insert and pole piece 106 and between the metallic insert and non-moving member 108. The metallic insert may be formed from a high-magnetic permeability alloy. The metallic insert may maintain its shape and/or magnetic properties as the temperature within system 100 changes, thereby reducing magnetic variability (e.g., variability in scale factor) in system 100 in response to changes in temperature. The metallic insert may be more permeable to the magnetic flux, e.g., compared to adhesives used to affix pole pieces to non-moving members in other accelerometer systems. The metallic insert may further distribute the magnetic flux as the magnetic flux flows from non-moving member 108 across the metallic insert and back into the magnet, thereby reducing an imbalance in magnetic flux within the magnetic circuit. The improved balance in the magnetic flux may increase the homogeneity of the magnetic field of the magnetic flux loop, which may improve the overall accuracy of system 100.

System 100 may represent a servo system which counter-balances acceleration along the sense axis with Lorentz forces parallel to the sense axis. For example, if system 100 accelerates along the sense axis, the acceleration may apply an acceleration force to the proof mass 104, where the acceleration force is applied to proof mass 104 in an opposite direction of the acceleration of accelerometer system 100. Processing circuitry 102 delivers first electrical signal to coil 110 to generate one or more Lorentz forces which counter-balance the acceleration force resulting from the acceleration along the sense axis. That is, the one or more Lorentz forces are applied to proof mass 104 in an opposite direction to the acceleration force, such that proof mass 104 is not displaced from a null position by the acceleration force. The magnitude of the acceleration force changes based on the magnitude of the acceleration along the sense axis. As such, to prevent the displacement of proof mass 104 from the null position, processing circuitry 102 changes the magnitude of the electrical signal delivered to coil 110 in order to change the magnitude of the one or more Lorentz forces which counter-balance the acceleration signal.

Lorentz forces are forces which arise from an interaction between an electrical field and a magnetic field. As discussed above, accelerometer system 100 includes a magnetic flux loop. The magnetic flux loop includes a passage of a magnetic flux from the pole piece 106 to non-moving member 108 through coil 110. The electrical signal flows through coil 110. The magnetic flux and the electrical signal may cause a Lorentz force to be applied to proof mass 104 in an opposite direction of the acceleration force applied to proof mass 104 due to the acceleration along the sense axis.

The metallic insert may include one or more slots disposed along the body of the insert. The one or more slots may facilitate flexure of the metallic insert, e.g., in response to vibration forces from non-moving member 108. The metallic insert may mitigate alterations to the scale factor of system 100 in response to vibration. The metallic insert may be shaped to such that a variation in minor loop slope of the magnet of pole piece 106 is compensated by variation in magnetic flux across coil 110 when system 100 is under vibration. This compensation may decouple the scale factor of system 100 from motion of proof mass 104 (e.g., due to vibrations), thereby increasing accuracy of system 100.

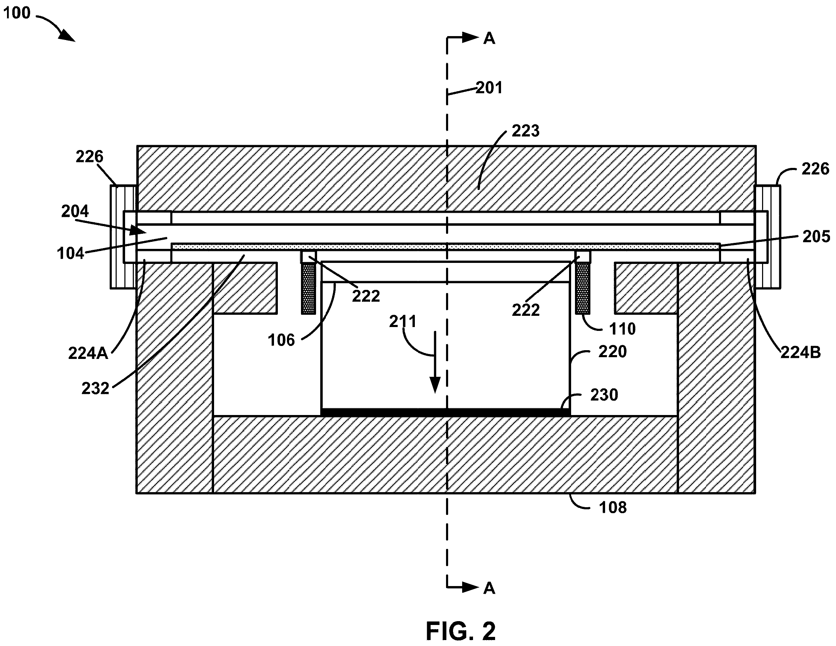

FIG. 2 is a conceptual diagram illustrating a side cutaway view of system 100, in accordance with one or more techniques of this disclosure. As seen in FIG. 2, system 100 includes proof mass assembly 204, pole piece 106, non-moving member 108, coil 110, magnet 220. Proof mass assembly 204 includes proof mass 104 and capacitive plate 205. In the example of FIG. 2, system 100 further includes spring elements 222, outer pads 224A-224B (collectively, "outer pads 224"), bands 226, capacitive gap 232, and non-moving member 223. Non-moving member 223 and non-moving member 108 may collectively define an outer housing of system 100. Metallic insert 230 may be disposed between magnet 220 and non-moving member 108.

Accelerometer system 100 may be configured to sense an acceleration along sense axis 201. For example, system 100 may be configured to sense an acceleration along sense axis 201 in a direction 211. In some cases, accelerometer system 200 precisely determines a magnitude of the acceleration along the sense axis 201 in the direction 211 in real time or near-real time such that processing circuitry (not illustrated in FIG. 2) may track a position of system 100 using dead reckoning. As seen in FIG. 2, proof mass assembly 204 is suspended between non-moving member 108 and second non-moving member 223 by outer pads 224. Coil 110 may be affixed to proof mass assembly 204 by spring elements 222. Spring elements 222 may reduce a different between coefficients of thermal expansion at an interface between coil 110 and proof mass assembly 204. In some examples, processing circuitry 102 may receive a sense signal indicative of a width of capacitive gap 232. In turn, processing circuitry 102 may deliver (e.g., cause the generator to deliver) an electrical signal to coil 110 in order to prevent a displacement of proof mass 104 in response to an acceleration of system 100 along sense axis 201. The magnitude of the electrical signal may be correlated with the magnitude of the acceleration.

Non-moving members 108, 223 may be attached to (e.g., clamped to) outer pads 224, securing proof mass assembly 204 between non-moving members 108, 223. The term "non-moving member" may refer to a member representing a reference position by which a position of proof mass assembly 204 may be compared. In other words, the position of proof mass assembly 204 may represent a position of proof mass assembly 204 relative to non-moving members 108 and 223. In some examples, non-moving member 108 includes dual metal materials, which may be part of a magnetic flux loop. In some examples, non-moving member 108 may be similar to a stator of a variable capacitor.

Coil 110 may conduct electricity such that electrical signals flow through coil 110. For example, an electrical signal may flow through a path of coil 110. The path of coil 110 may define a circular, oval, square, triangular, or other polygonal path. Coil 110 extend fully around an outer surface of pole piece 106, e.g., such that the electrical signal flows around the outer surface of pole piece 106 through coil 110.

Bands 226 are a metal pieces which fasten non-moving member 108 to non-moving member 223. In some examples, bands 226 may be attached to (e.g., bonded with epoxy) non-moving members 108 and 223, when non-moving members 108 and 223 are attached to proof mass assembly 204 by outer pads 224. Capacitive gap 232 represents a gap between capacitive plate 205 first non-moving member 108. Capacitive plate 205 may generate a sense signal which indicates a capacitance value. The capacitance value is correlated with a width of capacitive gap 232. In this way, capacitive plate 205 may represent sensor 112 of FIG. 1. Processing circuitry (not illustrating in FIG. 2) may receive the sense signal and control electrical signals delivered to coil 110 based on the sense signal.

A null width of capacitive gap 232 may, in some examples, be defined by a width of outer pads 224. In some examples, the null width of capacitive gap 232 is within a range from 0.0127 millimeters (mm) (e.g., about 0.0005 inches (in)) to 0.0635 mm (e.g., about 0.0025 in). When the width of capacitive gap 232 is at the null width of capacitive gap 232, proof mass 104 may be located at a null position. That is, proof mass 104 may be located at the null position such that the processing circuitry is configured to determine the acceleration along sense axis 201 based on the electrical signal delivered to coil 110.

In some examples, capacitive gap 232 may have a capacitance value. The processing circuitry may detect the capacitance value of capacitive gap 232, which in a closed-loop differential capacitance configuration can be detected and used by the processing circuitry to determine the acceleration of system 100. In some examples, an increase in a width of capacitive gap 232 may be indicative of an acceleration of accelerometer system 100 in direction 211. Conversely, a decrease in the width of capacitive gap 232 may be indicative of an acceleration of accelerometer system 200 in a direction opposite to direction 211. The processing circuitry may deliver (e.g., from the generator) the electrical signal to coil 110 to counter-balance a displacement of proof mass 104 from the null position. The magnitude of the electrical signal may be correlated with the magnitude of the acceleration along sense axis 201.

Magnet 220 is a magnet for providing a magnetic field to drive a magnetic circuit of magnet 220, pole piece 106, coil 110, and non-moving member 108. In some examples, magnet 220 may be made of Alnico, samarium-cobalt, neodymium-iron-boron, or other such materials. In some examples, magnet 220 may receive the forces and/or strains transmitted from non-moving member 108 caused by the construction of accelerometer system 100. In some examples, magnet 220 may be part of a zero gauge configuration of accelerometer system 100.

Magnet 220 may be connected to non-moving member 108 via an adhesive the adhesive may include, but is not limited to, epoxy. Metallic insert 230 may be placed between and in contact with magnet 220 and non-moving member 108. Metallic insert 230 may define an opening sized to contain the adhesive. Metallic insert 230 may define one or more slots extending through the body of metallic insert 230. The one or more slots may facilitate flexure of metallic insert 230, e.g., to relieve strain on metallic insert 230.

The magnetic flux may flow from non-moving member 108 through metallic insert 230 and into magnet 220. When system 100 is under vibration, coil 110 may move along sense axis 201 in response to the vibration, which may affect the proportion of coil 110 within the magnetic field defined by magnet 220. As a result, the scale factor of system 100 may vary when system 100 is under vibration. The magnitude of the change in the scale factor may be based on a minor loop slope of magnet 220.

Metallic insert 230 may compensate for changes in Lorentz forces resulting from movement of coil 110 under vibration. In some examples, metallic insert 230 distributes the magnetic flux along sensing axis 201 such that as coil 110 moves in or out of the magnetic field around magnet 220, a change in magnetic flux at or around one end of coil 110 may compensate for a change in magnetic flux at or around an opposite end of coil 110. In such examples, there is no net change in magnetic flux as coil 110 moves relative to magnet 220, thereby separating the scale factor of system 100 from motion of proof mass assembly 204 within system 100, e.g., due to vibration. The dimensions, e.g., the width, of metallic insert 230 may depend on the minor loop slope of magnet 220.

Pole piece 106 is a magnetic structure that enables the magnetic field of magnet 220 to be focused and drive the magnetic circuit of magnet 220, pole piece 106, coil 110, and non-moving member 108. For example, pole piece 106 may be magnetic structures that enable the magnetic field of the magnet to turn a corner and flow through coil 110. In these examples, by allowing the magnetic field of magnet 220 to go through coil 110, the magnetic field of magnet 220 may enter non-moving member 108 and flow around to the opposite side of the magnet through non-moving member 108 and metallic insert 230, and flow back through magnet 220 to proof mass 104 completing the magnetic circuit. For example, a magnetic circuit may represent a magnetic flux loop in which magnetic flux passes from magnet 220 to pole piece 106. The magnetic flux travels from pole piece 106 to non-moving member 108 through coil 110. Then, the magnetic flux travels through non-moving member 108A, through metallic insert 230, and back to magnet 220 in order to complete the magnetic circuit.

In some examples, pole piece 106 may be part of a zero gauge configuration of system 100. In some examples, pole piece 106 may be made from a permeable material such as invar, Mu Metal, Permalloy, or other such material.

Preventing proof mass 104 from displacing from the null position may be referred to herein as the "servo effect." In some examples, the processing circuitry may cause one or more Lorentz forces to counter-balance an acceleration force applied to proof mass 104 such that proof mass 104 does not move from the null position. This means that the processing circuitry is configured to adjust the one or more Lorentz forces in real time or near-real time such that the one or more Lorentz forces counter-balance the acceleration force applied to proof mass 104 at any given time, thus constantly maintaining the proof mass 104 at the null position. The electrical signals required to induce the one or more Lorentz forces may be generated by the processing circuitry based on the sense signal received from capacitive plate 205.

Coil 110 may be mounted on proof mass 104 of proof mass assembly 204. In some examples, processing circuitry may modify the current in coil 110 to servo proof mass 104 to maintain the null position. Any acceleration of system 100 will momentarily move the proof mass of proof mass assembly 204 out of the plane of the null position and the increase in current required to maintain proof mass 104 in the null position is proportional to the magnitude of the acceleration of system 100 along sense axis 201.

Although FIG. 2 illustrates accelerometer system 100 with a capacitive plate and a coil on a single side of proof mass assembly 204 to form a combined capacitive pick-off system, it is understood that accelerometer system 100 may function with a capacitor plate and a coil on each side of proof mass assembly 204. Similarly, although FIG. 2 illustrates system 100 with a non-moving member and a capacitor plate on the same side of proof mass assembly 204, system 100 may include non-moving member son both sides of proof mass assembly 204 to form the combined capacitive pick-off system.

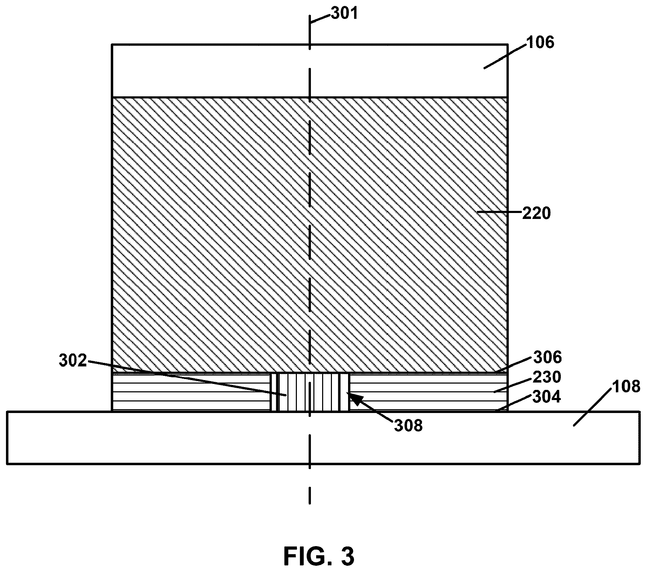

FIG. 3 is a cross-sectional diagram illustrating an example cross-sectional view of the accelerometer system 100 of FIG. 2, the cross-section being taken along line A-A of FIG. 2. As illustrated in FIG. 3, metallic insert 230 may define a first surface 304, a second surface 306, and an opening 308 extending through metallic insert 230 from the first surface 304 to the second surface 306. Adhesive 302 may be disposed within opening 308 to affix magnet 220 to non-moving member 108.

Metallic insert 230 may define first surface 304 and second surface 306. First surface 304 may be parallel to second surface 306. First surface 304 may form a metal-to-metal contact with an outer surface of non-moving member 108. Second surface 306 may form a metal-to-metal contact with magnet 220. Metallic insert 230 may be more magnetically permeable than adhesive 308 and may facilitate the flow of magnetic flux from non-moving member 108 to magnet 220. An outer perimeter of metallic insert 230 may be flush with an outer perimeter of magnet 220 (e.g., as illustrated in FIG. 3) or may be proud of the outer perimeter of magnet 220. Metallic insert 230 may facilitate redistribution and balancing of magnetic flux as the magnetic flux travels through metallic insert 230. In such examples, metallic insert 230 reduces the presence of regions with higher concentrations of magnetic flux at or around first surface 304 and/or second surface 306.

A width of metallic insert 230 (e.g., as measured along sensing axis 201) may be based at least in part on a minor loop slope of magnet 220. The width of metallic insert 230 may be selected (e.g., by a manufacturing assembly) to compensate for losses in magnetic flux through coil 110 within system 100, e.g., due to vibration. Metallic insert 230 may facilitate the compensation for the loss in magnetic flux, e.g., such that when metallic insert 230 is disposed within system 100, system 100 experiences no net change in magnetic flux across coil 110 under vibration. The width of metallic insert 230 may remain substantially uniform, e.g., in response to changes in temperature in system 100. The substantially uniform width of metallic insert 230 may reduce changes in the positions and/or permeability of elements in the magnetic flux loop as the temperature in system 100 changes, thereby maintaining the accuracy and repeatability of the measurements by system 100.

Metallic insert 230 may be formed from one or more high permeability metallic alloys such as, but is not limited to, Alloy 49, HyMu 80, or the like. Metallic insert 230 may exhibit magnetic permeability greater than or equal to the magnetic permeability of Invar. Metallic insert 230 may facilitate the flow of magnetic flux from non-moving member 108 into magnet 220 (e.g., across a greater surface area than an identical system 100 without metallic insert 230). Metallic insert 230 may help system 100 maintain consistent scale factor values in response to changes in the temperature in system 100, e.g., compared to (an identical system 100 without metallic insert 230).

Metallic insert 230 may include one or more slots (not pictured in FIG. 3) extending from first surface 304 to second surface 306. Each slot may extend at least partially around a longitudinal axis 301 of metallic insert 230. Longitudinal axis 301 may extend along sensing axis 201. The one or more slots may define alternating radial shapes (e.g., S-shape, Z-shape) and may allow for flexure of metallic insert 230 to reduce strain (e.g., circumferential strain) on metallic insert 230.

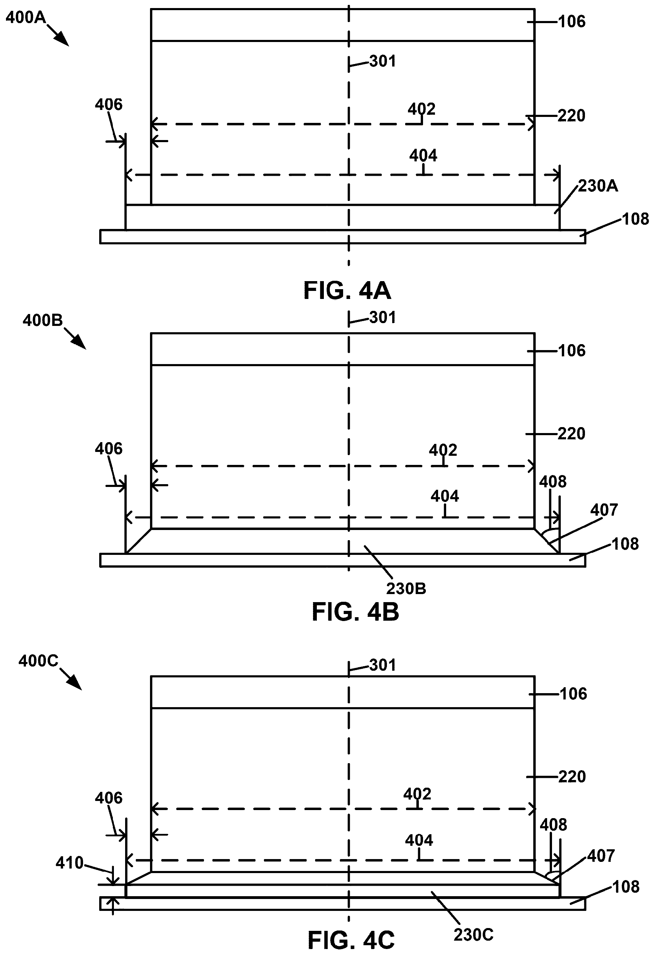

FIG. 4A is a conceptual diagram illustrating a side view of an example pole piece assembly 400A of accelerometer system 100 of FIG. 2. FIG. 4B is a conceptual diagram illustrating a side view of another example pole piece assembly 400B of accelerometer system 100 of FIG. 2. FIG. 4C is a conceptual diagram illustrating a side view of another example pole piece assembly 400C of accelerometer system 100 of FIG. 2. Pole piece assemblies 400A-C (collectively referred to herein as "pole piece assemblies 400") each illustrate an assembly including pole piece 106, magnet 220, metallic insert 230 (e.g., at least one of metallic insert 230A-230C), and non-moving member 108. While FIGS. 4A-4C illustrate three examples of metallic insert 230 (i.e., metallic inserts 230A-C), metallic insert 230 may define other shapes and/or features (e.g., as illustrated in FIG. 3).

In some examples, as illustrated in pole piece assembly 400A, metallic insert 230A may define an outer perimeter proud of magnet 220. In such examples, an outer diameter 404 of metallic insert 230A may be greater than an outer diameter 402 of magnet 220. Outer diameter 402 may be up to 0.94 centimeters (cm). Outer diameter 404 may be up to 1.91 cm. The outer perimeter metallic insert 230A may protrude past the outer perimeter of magnet 220 by a distance 406. Distance 406 may be at least 0.97 cm.

The protrusion of metallic insert 230A past the outer perimeter of magnet 220 may facilitate the flow of magnetic flux from non-moving member 108 to magnet 220 without concentrating the magnetic flux around the edges of magnet 220. The protrusion of metallic insert 230A past the outer perimeter of magnet 220 may facilitate the travel of the magnetic flux from non-moving member 108, around the edges of magnet 220, and into magnet 220. The protrusion of metallic insert 230A past the outer perimeter of magnet 220 may reduce localized over-saturation of magnetic flux along the outer surface of magnet 220.

In some examples, such as in pole piece assembly 400B illustrated in FIG. 4B, metallic insert 230B may define a chamfer 407 extending from second surface 306 to first surface 304. Chamfer 407 may define a chamfer angle 408 of up to 90 degrees. Chamfer angle 408 may be based on distance 406 and/or a width of metallic insert 230B. In some examples, such as in pole piece assembly 400C illustrated in FIG. 4C, chamfer 407 may extend partially along sensing axis 301 towards first surface 304. An unchamfered portion of metallic insert 230C may define an outer surface parallel to longitudinal axis 301 and may extend a distance 410 from first surface 304 towards second surface 306. Distance 410 may be up to 0.127 millimeters (mm).

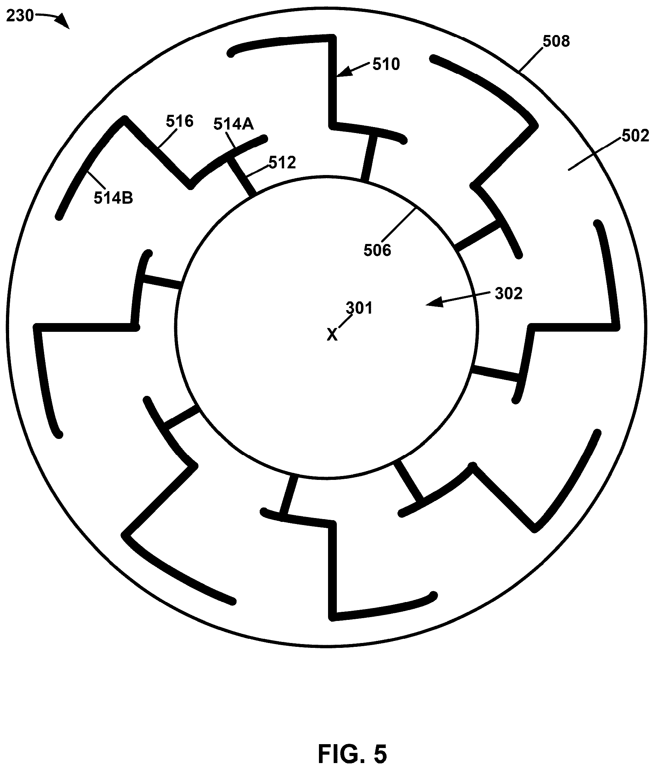

FIG. 5 is a conceptual diagram illustrating a top view of an example metallic insert 230 of accelerometer system 100 of FIG. 2. Metallic insert 230 may define a substantially annular structure with an inner perimeter 506 defining opening 302, outer perimeter 508, and surface 502 extending from inner perimeter 506 to outer perimeter 508.

Surface 502 may define either of first surface 304 or second surface 306, as illustrated in FIG. 3. Metallic insert 230 may define opening 302 extending along longitudinal axis 301 through the body of metallic insert 230. Opening 302 may be sized to retain adhesive 308 completely within opening 302. Surface 502 may extend along a reference plane substantially orthogonal to longitudinal axis 301. An opposite surface of metallic insert 230 to surface 502 may be parallel to surface 502. Surface 502 may be substantially smooth, e.g., to promote increased contact between surface 502 and one of magnet 220 or non-moving member 108. A combined area of the surface area of surface 502 and a cross-sectional area of opening 302 may be substantially similar to and/or greater than a surface area of an outer surface of magnet 220 that is placed into contact with surface 502.

Metallic insert 230 may include a plurality of slots 510 extending at least partially through surface 502 (e.g., entirely through surface 502). For example, slots 510 may extend from surface 502 through to an opposite surface of metallic insert 230. Each of slots 510 may extend along a reference axis parallel to longitudinal axis 301.Each of slots 510 may be defined by a plurality of sub-slots (e.g., sub-slots 512, 514A, 514B, 516). Sub-slots may be alternatively referred to herein as "sections" of slots 510.

Each slot 510 may extend at least partially around longitudinal axis 301 and may include radially and/or circumferentially offset sub-slots (e.g., sub-slot 514A, 514B). Each slot 510 and/or one or more of sub-slots 512, 514A, 514B, or 516 may define a width of up to 0.51 mm. Slots 510 may facilitate flexure of metallic insert 230 between magnet 220 and non-moving member 108, e.g., to relieve circumferential strain on metallic insert 230. While slots 510 are illustrated in FIG. 5 as extending in one direction (e.g., in a clockwise direction), slots 510 on other examples of metallic insert 230 may extending in an opposite direction (e.g., in a counterclockwise direction) or in both directions. Metallic insert 230 may include one, two, or three or more slots 510 disposed on surface 502.

Within each slot 510, sub-slots 514A and 514B (collectively referred to herein as "sub-slots 514") may extend circumferentially along surface 502 and at least partially around longitudinal axis 301. Sub-slots 514A and 514B may define same or different arc lengths from one end to an opposite end. While slots 510 illustrated in FIG. 5 is illustrated as including two sub-slots 514, other examples of slots 510 may include one sub-slot 514 or three or more sub-slots 514.

Radially adjacent sub-slots 514 may be connected by sub-slot 516. Each sub-slot 516 may extend towards longitudinal axis 301. For example, sub-slot 516 may extend along a reference axis extending towards and intersecting longitudinal axis 301. Sub-slot 516 may connect sub-slots 514 within slot 510 together, e.g., such that sub-slots 514 and sub-slot 516 form a continuous slot 510 within surface 502. In such examples, slot 510 may define a Z-shape. Each sub-slot 516 may connect a first end of a first sub-slot 514 (e.g., sub-slot 514A) to a second end of second sub-slot 514 (e.g., sub-slot 514B). In some examples, each sub-slot 516 may connect to one or more of sub-slots 514 at a location between the ends of the sub-slot 514.

Each of slots 510 may be connected to opening 301 via sub-slot 512. Sub-slot 512 may extend from inner perimeter 506 of metallic insert 230 to a radially inward-most sub-slot 514 (e.g., sub-slot 514) within slot 510. Sub-slot 512 may extend towards longitudinal axis 301. The connection between slot 510 and opening 302 via sub-slot 512 may facilitate flexure of metallic insert 230 and increase strain relief of metallic insert 230.

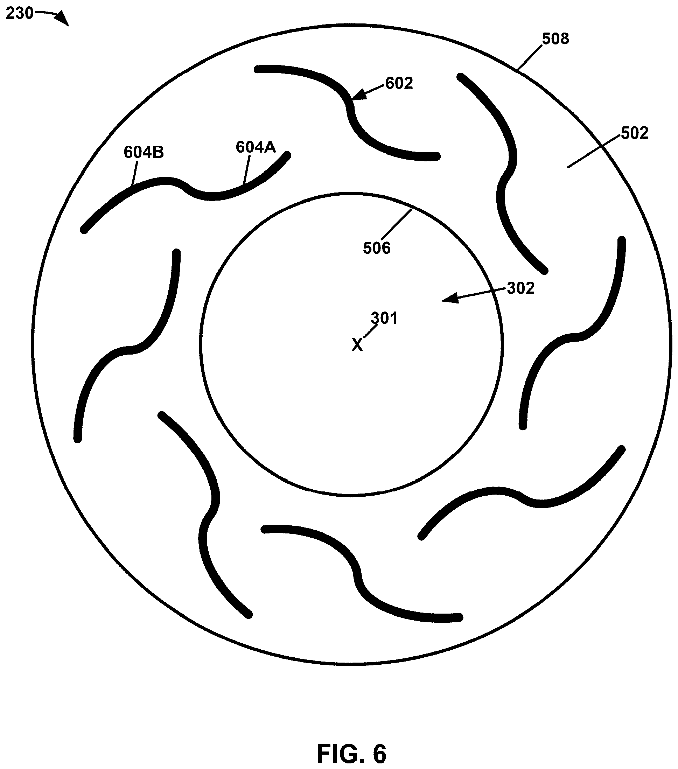

FIG. 6 is a conceptual diagram illustrating a top view of another example metallic insert 230 of the accelerometer system 100 of FIG. 2. In some examples, as illustrated in FIG. 6, metallic insert 230 may include slots 602 disposed on surface 502. Slots 602 may be substantially similar to slots 510, except as described below.

Each of slots 602 may be defined by two or more sub-slots 604A, 604B (collectively referred to herein as "sub-slots 604") Each sub-slot 604 may extend circumferentially around surface 502 and at least partially around longitudinal axis 301. For each slot 602, each sub-slot 604 may be radially and/or circumferentially offset from another sub-slot 604. For example, as illustrated in FIG. 6, sub-slot 604A may be circumferentially and radially offset from sub-slot 604B. Each of sub-slots 604 may define a continuous, curved slot extending at least partially through metallic insert 230 (e.g., from surface 502 to an opposite surface of metallic insert 230). A first end of sub-slot 604A may be connected to a second end of sub-slot 604B, e.g., to form a single, continuous slot 602 within surface 502. Slot 602 may define an S-shape, Z-shape, V-shape, or the like.

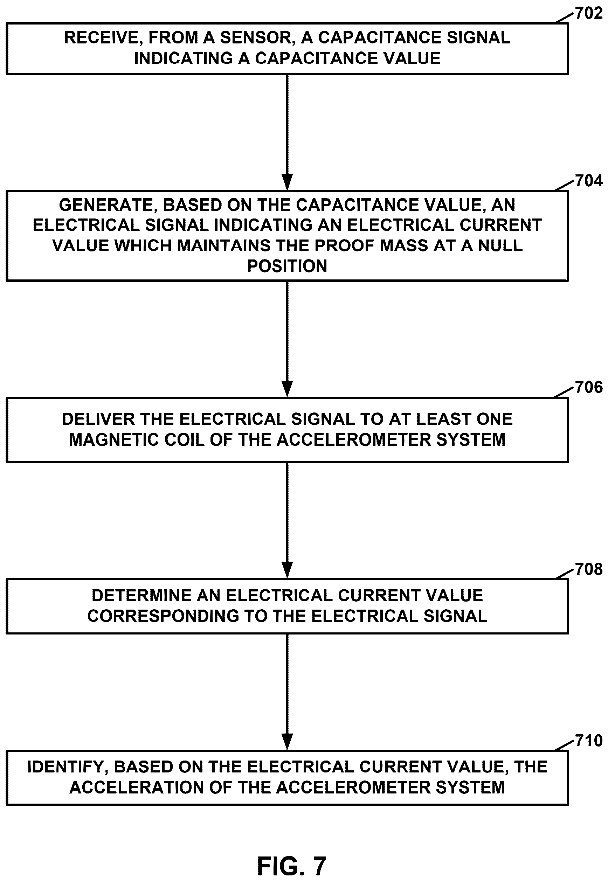

FIG. 7 is a flow chart illustrating an example technique for determining an acceleration using an electromagnetic accelerometer, in accordance with one or more techniques of this disclosure. FIG. 7 is described with respect to accelerometer system 100 illustrated in FIGS. 1-6. However, the techniques of FIG. 5 may be performed by different components of system 100 or by additional or alternative devices.

Processing circuitry 102 may receive, from sensor 112, a capacitance signal indicating a capacitance value (702). In some examples, sensor 112 may represent a capacitive plate (e.g., capacitive plate 205 of FIG. 2) located on a side of proof mass 104. Processing circuitry 102 may generate, based on the capacitance signal, an electrical signal to include an electrical current value which maintains proof mass 104 at a null position (704). Processing circuitry 102 may deliver the electrical signal to coil 110 (706). In some examples, processing circuitry 102 delivers the electrical signal to coil 110 such that coil 110 applies a Lorentz force to proof mass 104, counteracting an acceleration force applied to proof mass 104.

Processing circuitry 102 may determine an electrical current value corresponding to the electrical signal (708). Subsequently, processing circuitry 102 may identify, based on the electrical current value, the acceleration of accelerometer system 100 based on the electrical current value (710). The strength of the electrical signal required to maintain proof mass 104 in a null position may be correlated with the acceleration of accelerometer system 100 along a sense axis.

During operation of system 100, system 100 may be under vibration, e.g., from an object system 100 is coupled to. The vibrations may cause coil 110 to move within system 100, e.g., into and/or out of a magnetic field defined by magnet 220 of system 100. Metallic insert 230 between magnet 220 and non-moving member 108 of system 100 may compensate any losses in magnetic flux through coil 110 due to the vibrations, e.g., such that system 100 may experience no net change in magnetic flux in response to movement of proof mass 104 and/or coil 110 within system 100 due to the vibrations.

This disclosure describes the following examples:
Example 1: an accelerometer system comprising: a housing; a magnet disposed within the housing and extending along a longitudinal axis from a first end to a second end; and a metallic insert disposed between the first end of the magnet and a surface of the housing, wherein a first surface of the metallic insert is configured to contact the first end of the magnet, and wherein a second surface of the metallic insert is configured to contact the surface of the housing.
Example 2: the accelerometer system of example 1, wherein the metallic insert defines an annulus comprising an opening extending through a center of the metallic insert from the first surface to the second surface, and wherein the accelerometer system further comprises an adhesive disposed within the opening of the metallic insert and affixing the first end of the magnet to the surface of the housing.
Example 3: the accelerometer system of any of examples 1 or 2, wherein the metallic insert defines one or more slots extending from the first surface to the second surface, and wherein each slot of the one or more slots extends at least partially around the longitudinal axis.
Example 4: the accelerometer system of example 3, wherein each slot of the one or more slots comprises a first section and a second section, the second section being radially offset from the first section.
Example 5: the accelerometer system of any of examples 3 or 4, wherein each slot of the one or more slots defines an S-shape.
Example 6: the accelerometer system of any of examples 3-5, wherein the metallic insert defines an annulus defining an opening extending through a center of the metallic insert, and wherein each slot of the one or more slot is connected to the opening.
Example 7: the accelerometer system of any of examples 3-6, wherein each slot of the one or more slots comprises: a first section extending at least partially around the longitudinal axis; a second section extending at least partially around the longitudinal axis, wherein the second section is radially and circumferentially offset from the first section; and a third section connecting the first section to the second section.
Example 8: the accelerometer system of any of examples 1-7, wherein the magnet defines a first outer perimeter, wherein the metallic insert defines a second outer perimeter, and wherein the second outer perimeter is radially outwards of the first outer perimeter.
Example 9: the accelerometer system of any of examples 1-8, wherein the metallic insert defines a chamfer extending from the first surface of the metallic insert at least partially towards the second surface of the metallic insert.
Example 10: the accelerometer system of any of examples 1-9, wherein the metallic insert is formed from a material comprising a high permeability metallic alloy.
Example 11: an accelerometer system comprising: an excitation ring; a magnetic assembly comprising: a pole piece, a magnet configured to generate a magnetic flux, and a metallic insert disposed between the excitation ring and the magnet; a proof mass assembly comprising: a proof mass, a coil disposed around the pole piece, wherein the magnetic flux flows from the excitation ring to the pole piece across the coil; and processing circuitry configured to: cause a current to flow through the coil to apply a Lorentz force to the proof mass.
Example 12: the accelerometer system of example 11, wherein the metallic insert defines an annulus comprising an opening extending through a center of the metallic insert, and wherein the accelerometer system further comprises an adhesive disposed within the opening of the metallic insert, the adhesive affixing the magnet to the excitation ring.
Example 13: the accelerometer system of any of examples 11 or 12, wherein a first surface of the metallic insert contacts the magnet, and wherein a second surface of the metallic insert contacts the excitation ring, the second surface being different from the first surface.
Example 14: the accelerometer system of any of examples 11-13, wherein the metallic insert defines one or more slots extending through the metallic insert, each slot of the one or more slots extending at least partially around a longitudinal axis of the metallic insert.
Example 15: the accelerometer system of any of examples 11-14, wherein the metallic insert defines one or more slots extending from the first surface to the second surface, and wherein each slot of the one or more slots extends at least partially around the longitudinal axis.
Example 16: the accelerometer system of any of examples 11-15, wherein each slot of the one or more slots comprises: a first section extending at least partially around the longitudinal axis; a second section extending at least partially around the longitudinal axis, wherein the second section is radially and circumferentially offset from the first section; and a third section connecting the first section to the second section.
Example 17: a metallic insert comprising: an annular body extending around a longitudinal axis, the annular body defining: a first surface; a second surface different from the first surface; and an opening extending from the first surface to the second surface; and a plurality of slots disposed on the annular body, wherein each slot of the plurality of slots extends at least partially around the longitudinal axis, wherein the metallic insert is configured to be disposed between a magnet of an accelerometer and an excitation ring of the accelerometer.
Example 18: the metallic insert of example 17, wherein each slot of the plurality of slots comprises a first section and a second section, the second section being radially and circumferentially offset from the first section.
Example 19: the metallic insert of any of examples 17 or 18, wherein each slot of the plurality of slots is connected to the opening.
Example 20: the metallic insert of any of examples 17-19, wherein each slot of the one or more slots comprises: a first section extending at least partially around the longitudinal axis; a second section extending at least partially around the longitudinal axis, wherein the second section is radially and circumferentially offset from the first section; and a third section connecting the first section to the second section.

In one or more examples, the accelerometers described herein may utilize hardware, software, firmware, or any combination thereof for achieving the functions described. Those functions implemented in software may be stored on or transmitted over, as one or more instructions or code, a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure.

Instructions may be executed by one or more processors within the accelerometer or communicatively coupled to the accelerometer. The one or more processors may, for example, include one or more DSPs, general purpose microprocessors, application specific integrated circuits ASICs, FPGAs, or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules configured for performing the techniques described herein. Also, the techniques could be fully implemented in one or more circuits or logic elements.

The techniques of this disclosure may be implemented in a wide variety of devices or apparatuses that include integrated circuits (ICs) or sets of ICs (e.g., chip sets). Various components, modules, or units are described in this disclosure to emphasize functional aspects of devices configured to perform the disclosed techniques, but do not necessarily require realization by different hardware units. Rather, various units may be combined or provided by a collection of interoperative hardware units, including one or more processors as described above, in conjunction with suitable software and/or firmware.

## Claims

1. An accelerometer system comprising:
a housing;
a magnet disposed within the housing and extending along a longitudinal axis from a first end to a second end; and
a metallic insert disposed between the first end of the magnet and a surface of the housing, wherein a first surface of the metallic insert is configured to contact the first end of the magnet, and wherein a second surface of the metallic insert is configured to contact the surface of the housing.

2. The accelerometer system of claim **1,** wherein the metallic insert defines an annulus comprising an opening extending through a center of the metallic insert from the first surface to the second surface, and wherein the accelerometer system further comprises an adhesive disposed within the opening of the metallic insert and affixing the first end of the magnet to the surface of the housing.

3. The accelerometer system of any of claims 1 or 2, wherein the metallic insert defines one or more slots extending from the first surface to the second surface, and wherein each slot of the one or more slots extends at least partially around the longitudinal axis.

4. The accelerometer system of claim 3, wherein each slot of the one or more slots comprises a first section and a second section, the second section being radially offset from the first section.

5. The accelerometer system of any of claims 3 or 4, wherein each slot of the one or more slots defines an S-shape.

6. The accelerometer system of any of claims 3-5, wherein the metallic insert defines an annulus defining an opening extending through a center of the metallic insert, and wherein each slot of the one or more slot is connected to the opening.

7. The accelerometer system of any of claims 3-6, wherein each slot of the one or more slots comprises:
a first section extending at least partially around the longitudinal axis;
a second section extending at least partially around the longitudinal axis, wherein the second section is radially and circumferentially offset from the first section; and
a third section connecting the first section to the second section.

8. The accelerometer system of any of claims 1-7, wherein the magnet defines a first outer perimeter, wherein the metallic insert defines a second outer perimeter, and wherein the second outer perimeter is radially outwards of the first outer perimeter.

9. The accelerometer system of any of claims 1-8, wherein the metallic insert defines a chamfer extending from the first surface of the metallic insert at least partially towards the second surface of the metallic insert.

10. The accelerometer system of any of claims 1-9, wherein the metallic insert is formed from a material comprising a high permeability metallic alloy.

11. A metallic insert comprising:
an annular body extending around a longitudinal axis, the annular body defining:
a first surface;
a second surface different from the first surface; and
an opening extending from the first surface to the second surface; and
a plurality of slots disposed on the annular body, wherein each slot of the plurality of slots extends at least partially around the longitudinal axis,
wherein the metallic insert is configured to be disposed between a magnet of an accelerometer and an excitation ring of the accelerometer.

12. The metallic insert of claim 11, wherein each slot of the plurality of slots comprises a first section and a second section, the second section being radially and circumferentially offset from the first section.

13. The metallic insert of any of claims 11 or 12, wherein each slot of the plurality of slots is connected to the opening.

14. The metallic insert of any of claims 11-13, wherein each slot of the one or more slots comprises:
a first section extending at least partially around the longitudinal axis;
a second section extending at least partially around the longitudinal axis, wherein the second section is radially and circumferentially offset from the first section; and
a third section connecting the first section to the second section.
